# EUROPÄISCHE PATENTSCHRIFT

(11) **EP 2 410 865 B1**
(45) Veröffentlichungstag und Bekanntmachung des Hinweises auf die Patenterteilung: **15.05.2013**
(21) Anmeldenummer: 10710357.4
(22) Anmeldetag: 26.03.2010
(51) Int. Cl.: A23G 3/00, A23G 3/02, A23G 3/12, A23G 3/54, A23G 3/42

(54) **TIEFTEMPERATUR-MOGULVERFAHREN SOWIE MIT DIESEM VERFAHREN HERSTELLBARE KONFEKTARTIKEL**
LOW TEMPERATURE MOGUL PROCESS AND ALSO THE CONFECTIONARY ARTICLES PRODUCIBLE BY THIS PROCESS
PROCÉDÉ DU TYPE MOGUL, À BASSE TEMPÉRATURE, ET ARTICLES DE CONFISERIE OBTENUS AU MOYEN DE CE PROCÉDÉ

(30) Priorität: 27.03.2009 CH 514092009
(43) Veröffentlichungstag der Anmeldung: 01.02.2012
(73) Patentinhaber: Innogel AG, 6331 Hünenberg (CH)
(72) Erfinder: MÜLLER, Rolf, CH-8055 Zürich (CH); INNEREBNER, Federico, CH-8049 Zürich (CH)
(74) Vertreter: Becker Kurig Straus
(86) Internationale Anmeldenummer: PCT/EP2010/054018
(87) Internationale Veröffentlichungsnummer: WO 2010/072847

(56) Entgegenhaltungen:
- WO-A-2007/128150
- WO-A1-2006/096412
- WO-A2-2006/049947

## Beschreibung

Die Erfindung betrifft ein optimiertes und effizienteres Tieftemperatur-Mogulverfahren mit kontrolliertem Verweilzeitspektrum für Gießmassen, enthaltend quellbare bzw. lösliche Stärkepartikel, welche erst nach dem Gießen substanziell quellen bzw. sich lösen. Weiterhin betrifft die Erfindung mit diesem Verfahren herstellbare gefüllte Konfektartikel, insbesondere mit gummielastischer Textur, die der von Gelatine sehr ähnlich ist, ohne dass hierzu jedoch Gelatine eingesetzt werden muss.

### Stand der Technik

In der Süßwarenindustrie ist das Mogulverfahren weit verbreitet. Dabei wird zunächst, meist mit einem Batch-Verfahren, gelegentlich auch mit einem kontinuierlichen Verfahren, die Gießmasse aufgekocht. Diese Gießmasse, welche auch das Geliermittel enthält, wird anschließend zur Mogulanlage in ein beheiztes Vorratsgefäß transferiert, wo die Gießmasse über einen längeren Zeitraum gelagert werden kann, ohne dass sie sich verändert. Das Vorratsgefäß speist dann die Gießeinheit der Mogulanlage, wobei die heiße Gießmasse in Negativformen portioniert wird. Beim Abkühlen der Gießmasse in den Formen findet eine Gelierung statt, wodurch die Formkörper verfestigt werden. Ein Nachteil der Verwendung heißer Gießmassen besteht darin, dass diese keine temperaturempfindlichen Additive enthalten können. Weiterhin können daraus hergestellte Konfektartikel nicht mit temperaturempfindlichen Füllungen versehen werden.

Das Mogulverfahren ist schon lange Zeit in prinzipiell unveränderter Art bekannt und im Gebrauch und wird beispielsweise in US 2,726,969 und US 1,894,651 beschrieben.

Mit diesem Verfahren war der Einsatz von Stärke als Geliermittel bisher auf kurzkettige bzw. sogenannte dünnkochende Stärke eingeschränkt. Ein solches Verfahren wird zum Beispiel in US 4,886,678 beschrieben.

Längerkettige Stärke in gekochter Form erzeugt hingegen eine derart hohe Viskosität, sodass die Massen nicht mehr gegossen werden können. Andererseits können aber gummielastische Texturen, die den mittels Gelatine machbaren Texturen ähnlich sind, nur mit langkettiger Stärke erhalten werden. In der Patentanmeldung WO 2007/128150 A1, deren Offenbarung hier per Referenz mit eingeschlossen ist, wird ein neues Verfahren beschrieben, wobei die Stärke in Form von Partikeln mit der flüssigen Phase gemischt und dann gegossen wird, während die Partikel erst höchstens teilweise gequollen sind, sodass die Viskosität beim Gießvorgang noch tief ist. Eine substanzielle Quellung bzw. Gelierung findet erst nach dem Gießvorgang statt. Es wurde festgestellt, dass dieses Verfahren auf Mogulanlagen anwendbar ist, wenn die Batchgröße gegenüber herkömmlichen Verfahren reduziert wird, allerdings muss dann etwa alle 15 Minuten ein neuer Batch der Gießmasse hergestellt werden. Dieser Umstand erschwert die Umsetzung in der Praxis, da die Industrie nicht für solche kleinen Batchgrößen eingerichtet ist. Außerdem nimmt die Viskosität vom Anfang bis zum Ende eines Batches zu, sodass die Viskosität beim Gießen ebenfalls variiert und Variationen in den Produkten entstehen. Durch noch kleinere Batchgrößen kann dieses Problem deutlich verringert werden, aber dies ist in der Praxis nicht durchführbar. Weitere Probleme sind Ablagerungen von Gießmasse, die in den Kanälen der Gießeinheit auftreten und periodisch ausgespült werden, wodurch die Qualität der Produkte beeinträchtigt wird, sowie unerwünschte Fadenbildung beim Gießen.

Es wurde überraschenderweise gefunden, dass alle diese Probleme gelöst werden können, wenn die verschiedenen infinitesimalen Volumina der Gießmasse beim Mischen der festen Phase (der Partikel) mit der flüssigen Phase (der Zuckermasse) eine möglichst ähnliche Geschichte erlebt haben, d.h. wenn das Verweilzeitspektrum nach diesem Mischvorgang gewissen Anforderungen genügt, beispielsweise eine eingeschränkte Halbwertsbreite aufweist. Eine zusätzliche Verbesserung des Verfahrens wird durch weitere Anforderungen an das Verweilzeitspektrum am Eingang zur Mogulanlage erreicht. Außerdem können mit der Umsetzung dieser Bedingungen, wobei Verfahren eingesetzt werden, die in der Mogultechnologie neu sind, aber wenig Investitionen bedeuten, die Verfahrenskosten gesenkt werden, da damit ein höherer Automatisierungsgrad erreicht werden kann.

Es ist Aufgabe der vorliegenden Erfindung, ein optimiertes Tieftemperatur-Mogulverfahren zur Herstellung von gegossenen Konfektartikeln, insbesondere von Konfektartikeln, enthaltend temperaturempfindliche Inhaltsstoffe und von gefüllten Konfektartikeln, bereitzustellen, welches bei tiefen Temperaturen, insbesondere bei Umgebungstemperatur, durchgeführt werden kann. Weiterhin ist es Aufgabe der vorliegenden Erfindung, einen mit diesem Verfahren herstellbaren gefüllten Konfektartikel bereitzustellen, welcher eine temperaturempfindliche Füllung, wie beispielsweise Schokoladenmassen, Aromen, Vitamine etc., enthalten kann, ohne dass diese geschädigt wird oder ihre Form verliert.

### Ausführliche Beschreibung

Diese Aufgabe wird erfindungsgemäß durch ein Tieftemperatur-Gießverfahren zur Herstellung von Konfektartikeln auf einer Mogulanlage, wobei quellbare oder lösliche Stärkepartikel in einer flüssigen Phase gemischt und dann diese Masse gegossen wird und wobei die Stärkepartikel erst nach dem Gießen substantiell quellen oder sich lösen, wobei nach Mischen der festen Phase mit der flüssigen Phase die Verweilzeit der Gießmasse derart eingestellt wird, dass das Maximum tM des Verweilzeitspektrums W1(t) unmittelbar nach Mischen der festen Phase mit der flüssigen Phase bei < 10 min liegt und die Halbwertsbreite tH dieses Verweilzeitspektrums < 10 min ist.

Weiterhin wird die obige Aufgabe durch gefüllte, gummiartige Konfektartikel auf Stärkebasis gelöst, die nach dem zuvor beschriebenen optimierten Tieftemperatur-Mogulverfahren oder Kalt-Mogulverfahren herstellbar sind. Die Konfektartikel umfassen mindestens eine Füllung mit mindestens einer Umhüllung, wobei die Umhüllung mindestens eine Zuckermasse und noch Partikel partikulärer Stärke enthält und wobei die Füllung von der Umhüllung verschieden ist. Der Konfekt besitzt bevorzugt eine gummielastische Textur, die der von Gelatineprodukten sehr ähnlich ist.

Die Gießmischung (Gesamtrezeptur) zur Herstellung der Konfektartikel setzt sich zusammen aus einer festen Phase in Form von Partikeln und einer flüssigen Phase. Damit werden mittels des Mogulverfahrens Konfektartikel hergestellt, insbesondere Süßwaren mit gummiartiger Textur (Gummibonbons).

### Stärkepartikel

Die Partikel bestehen bevorzugt hauptsächlich aus quellbaren oder löslichen Stärkepartikeln, können jedoch auch noch weitere Hydrokolloide aufweisen.

In einer bevorzugten Ausführung liegt der Anteil an Hydrokolloiden der Partikel in Gew.% der Trockensubstanz bei > 50, vorzugsweise > 70, noch bevorzugter > 80, noch bevorzugter > 90, am bevorzugtesten > 95.

In einer bevorzugten Ausführung liegt der Anteil an Stärke an den Hydrokolloiden der Partikel in Gew.% bei > 50, vorzugsweise > 70, noch bevorzugter > 80, noch bevorzugter > 90, noch bevorzugter 95, am bevorzugtesten > 97. In weiter weiteren Ausführungsform liegt dieser Anteil bei 100.

### Partikelgröße

Je kleiner die mittlere Partikelgröße ist, umso schneller findet die Lösung bzw. Quellung der Partikel statt, umso kürzer aber ist auch das Zeitfenster nach der Einmischung der Partikel in die Zuckermasse bzw. in die flüssige Phase. Ist die Partikelgröße zu groß, so ist die Löslichkeit oder Quellbarkeit nicht mehr hinreichend gegeben, oder der Vorgang dauert zu lange, außerdem wird die Homogenität der Produkte beeinträchtigt. In einer bevorzugten Ausführungsform liegt die untere Grenze für die mittlere Partikelgröße in Mikrometer im Bereich von > 1, vorzugsweise von > 5, noch bevorzugter von > 10, noch bevorzugter von > 20, ganz besonders bevorzugt von > 30. Die obere Grenze für die mittlere Partikelgröße in Mikrometer liegt bevorzugt im Bereich von < 500, besonders bevorzugt von < 300, noch bevorzugter von < 200, noch bevorzugter von < 150, noch bevorzugter von < 130, ganz besonders bevorzugt von < 110.

### Stärke

Die Stärke, die in den Partikeln enthalten ist, weist mindestens eine langkettige Stärke auf. Als langkettig wird hier eine Stärke bezeichnet, deren Polymerisationsgrad größer ist als 300. Durch den Einsatz von langkettigen Stärken werden in der Gesamtrezeptur geringere Mengen von Partikeln benötigt und insbesondere gummielastische Texturen erhalten. Bevorzugt sind Stärken mit einem Dextrose-Äquivalent (DE) von < 10, vorzugsweise von < 5, noch bevorzugter von < 3, noch bevorzugter von < 2, noch bevorzugter von < 1, noch bevorzugter < 0,7, noch bevorzugter von < 0,5, noch bevorzugter von < 0,2, noch bevorzugter von < 0,1, ganz besonders bevorzugt von < 0,05. Mit tiefer werdendem DE Wert nimmt das Molekulargewicht zu. Das Dextrose-Äquivalent (DE) einer Stärke bezeichnet den prozentualen Anteil reduzierender Zucker an der Trockensubstanz. Es entspricht der Menge Glucose (= Dextrose), die je 100 g Trockensubstanz das gleiche Reduktionsvermögen hätte. Der DE-Wert ist ein Maß dafür, wie weit der Polymerabbau erfolgt ist, daher erhalten Stärken mit niedrigem DE-Wert einen hohen Anteil an Polysacchariden und einen niedrigen Gehalt an niedermolekularen Zuckern (Oligosaccharide), während Stärken mit hohem DE-Wert hauptsächlich nur noch aus niedermolekularen Zuckern bestehen. Das Dextrose-Äquivalent wird nach der ISO Norm 5377 bestimmt.

Das bevorzugte Gewichtsmittel M_{w} der Molekulargewichtsverteilung der langkettigen Stärke liegt mindestens bei 500.000 g/mol, besonders bevorzugt mindestens bei 800.000 g/mol, noch bevorzugter mindestens bei 1.000.000 g/mol, noch bevorzugter mindestens bei 1.200.000 g/mol, noch bevorzugter mindestens bei 1.500.000 g/mol, ganz besonders bevorzugt mindestens bei 2.000.000g/mol.

Die langkettige Stärke weist eine geringe bis verschwindende Neigung zur Retrogradation auf. Die langkettige Stärke kann nativ oder modifiziert sein. Hinsichtlich ihres Ursprungs sind Tapiokastärken besonders bevorzugt. In einer bevorzugten Ausführungsform liegt der Amylosegehalt in Gew.-% bei < 25, vorzugsweise bei < 20, noch bevorzugter bei < 15, ganz besonders bevorzugt bei < 10. Weiterhin werden bevorzugt Waxystärken eingesetzt. Bevorzugt werden auch modifizierte Stärken eingesetzt, insbesondere substituierte Stärken, davon bevorzugt Stärkeester und Stärkeether. Beispiele für modifizierte Stärken sind acetylierte, hydroxypropylierte, hydroxyethylierte, phosphorylierte Stärken sowie die entsprechenden chemisch vernetzten Stärken (z.B. Distärkephosphat, Distärkeadipat).

Die Stärkepartikel weisen in einer bevorzugten Ausführungsform zusätzlich zur langkettigen Stärke auch eine kurzkettige Stärke auf. Als kurzkettige Stärke wird Stärke mit einem mittleren Polymerisationsgrad von 15 - 300, vorzugsweise von 15 - 100, noch bevorzugter von 15 - 50, noch bevorzugter von 15- 35, ganz besonders bevorzugt von 15 - 25, verstanden. Die kurzkettige Stärke ist vorzugsweise kristallisierbar und/oder substanziell linear bzw. entzweigt. Sie führt zu Netzwerken mit der langkettigen Stärke mittels Heterokristallisation, d.h. kooperativer Kristallisation mit der langkettigen Stärke, und liefert so einen zusätzlichen Beitrag zur Gummielastizität, wobei außerdem die Klebrigkeit des Produkts reduziert wird. Die obere Grenze für den Anteil der kurzkettigen Stärke in Gew.-%, bezogen auf den gesamten Stärkeanteil der Partikel, liegt bei 50, vorzugsweise bei 30, noch bevorzugter bei 20, noch bevorzugter bei 15, noch bevorzugter bei 10, ganz besonders bevorzugt bei 5. Die untere Grenze für den Anteil der kurzkettigen Stärke in Gew.-%, bezogen auf den gesamten Stärkeanteil der Partikel, liegt bei 0, vorzugsweise bei 0,25, noch bevorzugter bei 0,5, ganz besonders bevorzugt bei 1.

### Weichmachergehalt der Partikel

Neben Stärke können die Partikel auch einen Weichmacher enthalten. Je höher der Anteil des Weichmachers in den Partikeln ist, umso schneller findet der Lösevorgang statt. Mit dem Weichmacher also kann ebenfalls auf das Zeitfenster der Verarbeitbarkeit und des nachfolgenden Lösevorgangs Einfluss genommen werden. Außerdem können Weichmacher wie Glycerin und Sorbitol Bestandteil der Rezeptur sein und können dann wahlweise über die partikuläre Stärke oder über die flüssige Phase eingebracht werden, wobei in diesem Fall die flüssige Phase eine reduzierte Viskosität aufweist, wodurch das Zeitfenster der Verarbeitbarkeit vergrößert wird. In einer bevorzugten Ausführungsform liegt der Weichmachergehalt der Partikel in Gew.-% der Trockensubstanz bei < 50, vorzugsweise bei < 30, noch bevorzugter bei < 20, noch bevorzugter bei < 13, noch bevorzugter bei < 7, ganz besonders bevorzugt bei < 4. Als Weichmacher kommen die bekannten Weichmacher für Hydrokolloide und Stärke in Frage, insbesondere Glycerin, Sorbitol und weitere Polyole, sowie Oligosaccharide, Zucker und Zuckerarten.

### Wassergehalt der Partikel

Wasser ist der effizienteste Weichmacher für Stärke, wird aber hier nicht als Weichmacher bezeichnet und separat behandelt. Der Wassergehalt sollte tief genug sein, damit die Partikel im eingefrorenen Zustand vorliegen, d.h. die Glasumwandlungstemperatur der Partikel ist größer als -10°C. Je tiefer der Wassergehalt ist, umso länger ist das Zeitfenster der Verarbeitbarkeit der Suspension. In einer bevorzugten Ausführungsform liegt der Wassergehalt der Partikel in Gew.-% bei < 25, vorzugsweise bei < 20, noch bevorzugter bei < 15, noch bevorzugter bei < 11, ganz besonders bevorzugt bei < 10. In einer weiteren bevorzugten Ausführungsform liegt die untere Grenze für den Wassergehalt in Gew.-% bei > 1, vorzugsweise bei > 3, noch bevorzugter bei > 5, ganz besonders bevorzugt bei > 6. Ist der Wassergehalt zu tief, können Mikrorisse in den Partikeln entstehen, welche zu einer deutlichen Verkürzung des Verarbeitungszeitraumes führen, wodurch der Einsatz erheblich erschwert wird.

### Struktur der Partikel

Der Zustand der Stärke innerhalb der Partikel ist in einer bevorzugten Ausführungsform mindestens teilweise amorph, vorzugsweise substanziell amorph. Ein amorpher Zustand ist vorteilhaft zur Quellung bzw. Lösung der Partikel in der flüssigen Phase.

### Form der Partikel

Die Form der Partikel hat einen deutlichen Einfluss auf das Verarbeitungsfenster. Mit einer sphärischen bzw. sphäroiden Geometrie wird bei gleicher nomineller Korngröße im Vergleich zu einer Plättchen oder Splitter Form ein längeres Verarbeitungsfenster erhalten. Daher wird eine möglichst sphärische, kompakte Geometrie bevorzugt. Eine kompakte Form kommt in einer hohen Schüttdichte zum Ausdruck. In einer bevorzugten Ausführungsform liegt die Schüttdichte der Partikel in g/cm³ bei > 0,5, vorzugsweise bei > 0,6, noch bevorzugter bei > 0,65, noch bevorzugter bei > 0,70. Die obere Grenze für die Schüttdichte in g/cm³ liegt bevorzugt bei 1,4, besonders bevorzugt bei 1.3, noch bevorzugter bei 1.2, noch bevorzugter bei 1.1, ganz besonders bevorzugt bei 1.0.

### Zustand der Partikel

Die Glasübergangstemperatur Tg in °C der Partikel liegt in einer bevorzugten Ausführungsform bei > 0, vorzugsweise bei > 15, noch bevorzugter bei > 25, noch bevorzugter bei > 45, ganz besonders bevorzugt bei > 60. Durch diese Bedingung liegen die Partikel in einem eingefrorenen Zustand vor, damit ist die Struktur stabil und es findet keine Gelierung bzw. Netzwerkbildung statt, wodurch der spätere Lösungsvorgang beeinträchtigt würde. Außerdem ist die Vermahlung der Partikel gut möglich, sowie ein gutes Handling ist garantiert (keine Klebrigkeit, keine Klumpenbildung).

### Weitere Hydrokolloide in den Stärkepartikeln

Die Stärkepartikel können neben langkettiger Stärke und gegebenenfalls kurzkettiger Stärke, welche selbst Hydrokolloide sind, weitere Hydrokolloide aufweisen, wodurch ihr Lösungsverhalten wie auch die Textur der Produkte modifiziert werden können. Als weitere Hydrokolloide kommen beispielsweise Agar, Carrageenan, Xanthan, Gellan, Galactomannane, Gummi Arabicum, Tragacanth, Karaya, Curdlan, beta Glucan, Alginate, Mannane, Chitosan, Cellulosen, Proteine, Gelatine, Pektine, weitere Stärken (nicht-langkettige Stärken, wie z.B. hydrolysierte und/oder oxidierte Stärke) und Mischungen davon in Frage.

### Herstellung der Partikel

Die Partikel bzw. die Komponenten, welche darin enthalten sind, werden allgemein durch ein Verfahren aufbereitet, das die Einstellung der definierten Struktur sicherstellt und die gewünschte Korngröße und Form liefert. Dies wird z.B. durch Lösen, Gelatinisierung oder Plastifizieren der Stärke und gegebenenfalls der Hydrokolloide erreicht. In einer bevorzugten Ausführungsform wird pregelatinisierte Stärke (insbesondere walzengetrocknete Stärke) und/oder plastifizierte Stärke (insbesondere extrudierte Stärke) eingesetzt. In einer weiteren bevorzugten Ausführungsform wird eine Mischung von pregelatinisierter Stärke mit plastifizierter Stärke eingesetzt, wobei die obere Grenze für den Anteil an pregelatinisierter Stärke in Gew.-% der Mischung der beiden Stärken bei 100, vorzugsweise bei 90, noch bevorzugter bei 80, noch bevorzugter bei 70, ganz besonders bevorzugt bei 60 liegt, während die untere Grenze für diesen Anteil bei 0, vorzugweise bei 5, noch bevorzugter bei 10, noch bevorzugter bei 15, noch bevorzugter bei 20, ganz besonders bevorzugt bei 30 liegt. In einer weiteren bevorzugten Ausführungsform der Erfindung wird Stärke eingesetzt, welche in einer wässerigen Mischung zu einem Film gegossen wurde und während oder nach der Formgebung durch eine Temperaturerhöhung gelatinisiert worden ist. Zur Einstellung bzw. Modifikation der Partikelgröße können diverse Mahlverfahren eingesetzt werden. Für das Mahlen werden bevorzugt Schlagmühlen, besonders bevorzugt Walzenmühlen, insbesondere mit mehreren Passagen arbeitend, eingesetzt.

### Flüssige Phase

Als flüssige Phase kommen grundsätzlich alle Typen von Gießmassen (abzüglich der Geliermittel) in Frage, die in der Mogultechnologie eingesetzt werden. Diese Gießmassen, abzüglich der Geliermittel und Additive, werden hier als Zuckermassen bezeichnet. Typische Zuckermassen bestehen aus Mischungen von Saccharose- und Glucose-Sirupen mit DE-Werten im Bereich von etwa 15 bis 100. Die Zuckermasse muss aber nicht notwendigerweise Saccharose- oder Glucose-Sirupe aufweisen, auch Zuckermassen auf Basis von Zuckeralkoholen und hydrierten Stärkehydrolysaten kommen in Frage wie beispielsweise Lycasin oder Isomalt.

Die flüssige Phase kann in einer bevorzugten Ausführungsform auch oben erwähnte weitere Hydrokolloide in gequollener oder gelöster Form aufweisen. In einer weiteren bevorzugten Ausführungsform weist die flüssige Phase auch langkettige und/oder kurzkettige Stärke in gequollener oder gelöster Form auf.

In einer bevorzugten Ausführungsform beträgt der maximal Anteil an weiteren Hydrokolloiden, welche in der flüssigen Phase gelöst oder gequollen vorliegen in Gew.-% bezogen auf die wasserfreie Rezeptur 20, noch bevorzugter 15, noch bevorzugter 10, noch bevorzugter 5, noch bevorzugter 2,5, am bevorzugtesten 0.

In einer bevorzugten Ausführungsform beträgt der maximal Anteil an langkettiger Stärke, welche in der flüssigen Phase gelöst oder gequollen vorliegen in Gew.-% bezogen auf die wasserfreie Rezeptur 20, noch bevorzugter 15, noch bevorzugter 10, noch bevorzugter 5, noch bevorzugter 2,5, am bevorzugtesten 0.

In einer bevorzugten Ausführungsform beträgt der maximal Anteil an kurzkettiger Stärke, welche in der flüssigen Phase gelöst oder gequollen vorliegen in Gew.-% bezogen auf die wasserfreie Rezeptur 15, noch bevorzugter 10, noch bevorzugter 7,5, noch bevorzugter 5, noch bevorzugter 2,5, noch bevorzugter 1,5, am bevorzugtesten 0.

### Additive

Als Additive werden dieselben Stoffe eingesetzt, die in der Süßwarenindustrie (Confectionery Industrie) eingesetzt werden, wie beispielsweise Aromen, Farbstoffe, Säuren, Zuckeraustauschstoffe, Öle, Vitamine, Emulgatoren, Stabilisatoren, Geschmacksverstärker, Antioxidantien, Salze, Schaumbildner oder Füllstoffe. Allerdings können erfindungsgemäß und bevorzugt auch hitzeempfindliche Additive verwendet werden, da für die Verarbeitung keine hohen Temperaturen benötigt werden. So verfärben sich beispielsweise rote Farbstoffe unter Hitzeeinfluss zu Brauntönen, so dass diese in herkömmlichen Gießmassen, welche bei hohen Temperaturen gegossen werden, nur eingeschränkt verwendbar sind. Auch viele natürliche oder künstliche Aromen, beispielsweise Beerenaromen oder die Aromen von Zitrusfrüchten, sind hitzempfindlich und bilden bei thermischer Belastung unangenehme Fremdaromen (Off-Flavour). Zudem verlieren sie beim Erhitzen ihre leicht flüchtigen Bestandteile (Top-Notes). Weitere hitzeempfindliche Additive, welche beim konventionellen Mogulverfahren nicht eingesetzt werden können, beim erfindungsgemässen Verfahren aber bevorzugt eingesetzt werden können, sind beispielsweise Vitamine; Fruchtextrakte; nutrazeutische Ingredienzien; pharmazeutische Ingrendienzien; probiotische Zusatzstoffe; fetthaltige Produkte, wie z. B. Schokolade, aromatisierte Fettglasuren, Fett-ummantelte Produkte wie Aromendrops, wie z.B. in gelierten Droplets fixierte Aromen; Farbtröpfchen und natürliche Farbstoffe. Als hitzeempfindliche Additive werden hier Additive bezeichnet, die bei Temperaturen in °C von > 55, vorzugsweise > 50, noch bevorzugter > 45, noch bevorzugter > 40, am bevorzugtesten > 35 thermisch geschädigt werden. Die thermische Schädigung kann dabei z.B. thermische Degradation, Verfärbung, Beeinträchtigung der Qualität, Beeinträchtigung der Form oder Struktur (z.B. Schmelzen, Erweichen, Fließen), oder Beeinträchtigung der Funktionalität sein.

### Gesamtrezeptur (Partikel plus flüssige Phase)

### Wassergehalt der Gesamtrezeptur

In einer bevorzugten Ausführungsform liegt der Wassergehalt der Gesamtrezeptur in Gew.-% zum Zeitpunkt des Gießvorgangs bei < 50, vorzugsweise bei < 37, noch bevorzugter bei < 33, noch bevorzugter bei < 31, ganz besonders bevorzugt bei < 29. In einer weiteren bevorzugten Ausführungsform liegt der Wassergehalt der Gesamtrezeptur in Gew.-% zum Zeitpunkt des Gießvorgangs bei > 15, vorzugsweise bei > 19, noch bevorzugter bei > 21, ganz besonders bevorzugt bei > 23.

### Anteil der Partikel an der Gesamtrezeptur

In einer bevorzugten Ausführungsform liegt die obere Grenze für den Anteil der Partikel in Gew.-%, bezogen auf die wasserfreie Gesamtrezeptur, bei < 50, vorzugsweise bei < 40, noch bevorzugter bei < 34, noch bevorzugter bei < 30, ganz besonders bevorzugt bei < 26. In einer weiteren bevorzugten Ausführungsform liegt die untere Grenze für den Anteil der Partikel, bezogen auf die wasserfreie Gesamtrezeptur, bei > 7, vorzugsweise bei > 11, noch bevorzugter bei > 13, noch bevorzugter bei > 15, ganz besonders bevorzugt bei > 17.

Anteil weiterer, vor dem Gießen gelöster bzw. gequollener Hydrokolloide in der flüssigen Phase

Der Anteil solcher Hydrokolloide (inklusive nicht-langkettige Stärke und kurzkettige Stärke) in Gew.-%, bezogen auf die wasserfreie Gesamtrezeptur, liegt bei 0 bis 30. In einer bevorzugten Ausführungsform liegt dieser Anteil bei 0 bis 15, vorzugsweise bei 0 bis 10, noch bevorzugter bei 0 bis 7, ganz besonders bevorzugt bei 0 bis 5. Solche Hydrokolloide können zur Modifikation der Textureigenschaften eingesetzt werden.

### Weichmachergehalt der Gesamtrezeptur

Die obere Grenze für den Anteil an Weichmacher in Gew.-%, bezogen auf die wasserfreie Gesamtrezeptur, liegt in einer bevorzugten Ausführungsform bei 30, vorzugsweise bei 20, noch bevorzugter bei 15, noch bevorzugter bei 10, ganz besonders bevorzugt bei 7. Die untere Grenze liegt bei 0, vorzugsweise bei 0,5, noch bevorzugter bei 1, noch bevorzugter bei 1,5, ganz besonders bevorzugt bei 2. Die angegebenen Bereiche gelten individuell für jeden einzelnen Weichmacher. Sie können als Feuchthaltemittel zur Modifikation der Textur, für die Verarbeitbarkeit (Lösung der partikulären Stärke) und für organoleptische Eigenschaften eingesetzt werden.

### Viskosität der Gesamtrezeptur

In einer bevorzugten Ausführungsform liegt die dynamische Viskosität der Gesamtrezeptur in Pas zum Zeitpunkt des Gießens bei < 60, vorzugsweise bei < 45, noch bevorzugter bei < 30, noch bevorzugter bei < 20, ganz besonders bevorzugt bei < 15.

Die untere Grenze für die dynamische Viskosität zu diesem Zeitpunkt liegt bei > 0,01, vorzugsweise bei > 0,1, noch bevorzugter bei > 0,5, ganz besonders bevorzugt bei > 1.

### Verfahren

Von grundlegender Bedeutung für das Verfahren ist das Verweilzeitspektrum W1(t) der Gießmasse nach dem Mischen der Partikel mit der flüssigen Phase. Weiter von Bedeutung ist das Verweilzeitspektrum W2(t) der Gießmasse am Eingang zur Mogulanlage. Das Verweilzeitspektrum W(t) ist eine Funktion der Zeit t und ist proportional zur Wahrscheinlichkeit, mit der ein Volumenelement der Gießmasse diese bestimmte Zeit t seit dem Beginn des Mischens von Partikeln mit der Zuckermasse oder der flüssigen Phase unterwegs gewesen ist. Das Verweilzeitspektrum kann beispielsweise in einem kontinuierlichen Prozess als Konzentration C(t) eines Markierungsstoffes in Funktion der Zeit gemessen werden. Der Nullpunkt der Messung wird durch die Zugabe des Markierungsstoffes definiert, wobei diese Zugabe idealerweise einer Deltafunktion nahe kommen sollte. Die nach Durchlaufen der zu charakterisierenden Apparatur gemessene Konzentration des Markierungsstoffes C(t) ist proportional zum Verweilzeitspektrum W(t). Für den Fall des Batch-Betriebes kann der Markierungsstoff direkt nach Verlassen des Vorratsbehälters hinzugegeben werden. Bei dieser Variante muss die Zeit, die die Mischung im Vorratsbehälter verbracht hat, zusätzlich berücksichtigt werden.

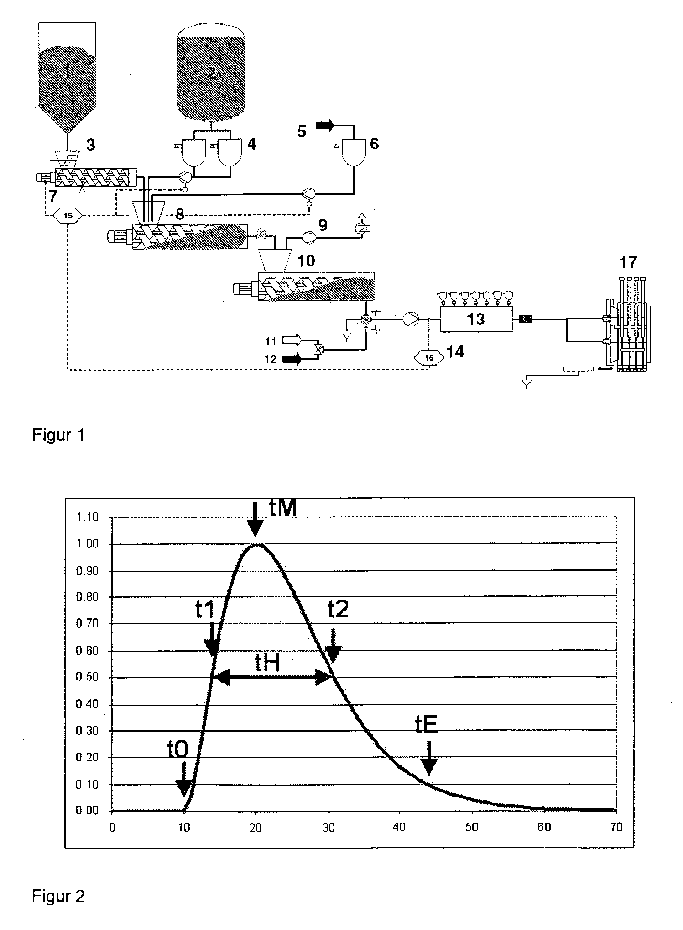

Das Verweilzeitspektrum ist für das Verfahren zur Verarbeitung von Gießmassen, welche quellbare bzw. lösliche Partikel in einer flüssigen Phase aufweisen von Bedeutung, da die Partikel nach Kontakt mit der flüssigen Phase zu quellen bzw. sich zu lösen beginnen, wodurch die Viskosität ansteigt, zunächst langsam, dann beschleunigt. Wenn unterschiedliche Volumina der Gießmasse zu stark differierende Zeitgeschichten aufweisen, d.h. unterschiedliche, aber nebeneinander vorliegende Voluminas an einem bestimmten Ort des Verfahrens, beispielsweise nach dem Mischen von Partikeln mit der Zuckermasse oder beim Eingang zur Mogulanlage waren zu diesem Zeitpunkt unterschiedlich lange im Verfahren unterwegs, differieren die Viskositäten innerhalb eines makroskopischen Volumenelements, wodurch partiell Entmischungsvorgänge induziert werden. Als Folge davon treten verschiedene Störungen auf, wie unerwünschte Fadenbildung beim Gießen, Ablagerungen in Kanälen des Gießsystems und variierende Produktqualität. Das Verweilzeitspektrum wird hinsichtlich des interessierenden Verfahrens durch folgende Parameter geeignet charakterisiert (Figur 2):
Die Verweilzeit tM, bei der die Funktion W(t) das Maximum aufweist.
Die Zeit t1, wo der Anstieg der Funktion W(t) die Hälfte des Maximalwertes erreicht.
Die Zeit t2, wo der Abfall der Funktion W(t) die Hälfte des Maximalwertes erreicht.
Die volle Halbwertsbreite tH = t2 - t1 des Peaks des Verweilzeitspektrums.
Die Zeit tE - tM, bei der die Funktion W(t) auf 10% des Maximalwertes W(tM) abgefallen ist.

Für ein optimales Verfahren sollte die Halbwertsbreite tH möglichst kurz sein. Weiter sollte die Zeit tE möglichst nahe bei tM liegen, um die Variationen der Viskosität innerhalb eines makroskopischen Volumenelements gering genug zu erhalten. Eine lange Halbwertsbreite und eine lange Zeit tE bedeuten, dass sich in der Gießmasse Partikel befinden, die eine deutlich längere Zeit bereits quellen und somit auch bei kleinem Anteil an der Gesamtmasse das Fliessverhalten prägen. Weiter von Bedeutung, insbesondere für gleichbleibende Produktqualität, ist die zeitliche Konstanz der Parameter des Verweilzeitspektrums, wenn also Verweilzeitspektren zu verschiedenen Zeiten gemessen werden, sollen deren Parameter möglichst gleich sein.

Für praktische Zwecke wird das Verweilzeitspektrum W1(t) zu dem Zeitpunkt bestimmt, wo die Partikel mit der flüssigen Phase bzw. der Zuckermasse fertig gemischt worden sind (unmittelbar nach dem Mischer 8 in Figur 1) bzw. das Verweilzeitspektrum W2(t), wo die Gießmasse in die Mogulgießeinheit eingespeist wird (unmittelbar vor der Mogulanlage 17 in Figur 1). Betreffend Eingang und Ausgang der Gießmasse an der Mogulgießeinheit wird bevorzugt das Prinzip "first in - first out" angewandt, d.h. die Breite des Verweilzeitspektrums wird dann durch die Fliesswege innerhalb der Gießeinheit nicht wesentlich verändert.

Für das Verweilzeitspektrum W1(t) gilt:
Die Verweilzeit tM in Sekunden ist < 600, vorzugsweise < 300, vorzugsweise < 120, noch bevorzugter < 90, noch bevorzugter < 70, noch bevorzugter < 50, noch bevorzugter < 30, ganz besonders bevorzugt < 20.
Die Halbwertsbreite tH in Sekunden ist < 600, vorzugsweise < 300, vorzugsweise < 120, noch bevorzugter < 90, noch bevorzugter < 70, noch bevorzugter < 50, noch bevorzugter < 30, ganz besonders bevorzugt < 20.
In einer bevorzugen Ausführungsform ist die Zeit tE - tM in Sekunden < 900, vorzugsweise < 600, vorzugsweise < 300, noch bevorzugter < 120, noch bevorzugter < 90, noch bevorzugter < 60, noch bevorzugter < 50, ganz besonders bevorzugt < 40.
In einer bevorzugten Ausführungsform ist die Standardabweichung von tM in Funktion der Zeit in % des mittleren Wertes < 40, vorzugsweise < 30, noch bevorzugter < 20, noch bevorzugter < 10, ganz besonders bevorzugt < 5.
In einer bevorzugten Ausführungsform ist die Standardabweichung von tH in Funktion der Zeit in % des mittleren Wertes < 40, vorzugsweise < 30, noch bevorzugter < 20, noch bevorzugter < 10, ganz besonders bevorzugt < 5.
In einer bevorzugten Ausführungsform ist die Standardabweichung von tE - tM in Funktion der Zeit in % des mittleren Wertes < 40, vorzugsweise < 30, noch bevorzugter < 20, noch bevorzugter < 10, ganz besonders bevorzugt < 5.

Für das Verweilzeitspektrum W2(t) gilt:
Die mittlere Verweilzeit tM in Sekunden ist < 900 vorzugsweise < 600, noch bevorzugter < 480, noch bevorzugter < 360, noch bevorzugter < 300, ganz besonders bevorzugt < 240.
Die Halbwertsbreite tH in Sekunden ist < 600, vorzugsweise < 480, noch bevorzugter < 360, noch bevorzugter < 300, noch bevorzugter < 240, noch bevorzugter < 180, noch bevorzugter < 120, ganz besonders bevorzugt < 60.
In einer bevorzugen Ausführungsform ist die Zeit tE - tM in Sekunden < 900, vorzugsweise < 600, noch bevorzugter < 480, noch bevorzugter < 360, noch bevorzugter < 300, noch bevorzugter < 240, noch bevorzugter < 180, ganz besonders bevorzugt < 120.
In einer bevorzugten Ausführungsform ist die Standardabweichung von tM in Funktion der Zeit in % des mittleren Wertes < 40, vorzugsweise < 30, noch bevorzugter < 20, noch bevorzugter < 10, ganz besonders bevorzugt < 5.
In einer bevorzugten Ausführungsform ist die Standardabweichung von tH in Funktion der Zeit in % des mittleren Wertes < 40, vorzugsweise < 30, noch bevorzugter < 20, noch bevorzugter < 10, ganz besonders bevorzugt < 5.
In einer bevorzugten Ausführungsform ist die Standardabweichung von tE - tM in Funktion der Zeit in % des mittleren Wertes < 40, vorzugsweise < 30, noch bevorzugter < 20, noch bevorzugter < 10, ganz besonders bevorzugt < 5.

Für die technische Umsetzung bestehen primär zwei Möglichkeiten. Die Bedingungen für die Parameter des Verweilzeitspektrums können realisiert werden, indem mit kleinen Batchgrößen gearbeitet wird, oder bevorzugt indem ein kontinuierliches Verfahren eingesetzt wird und dabei spezifische geeignete Mischer mit engen Verweilzeitspektren verwendet werden. In diesem Fall werden Partikel und flüssige Phase bzw. Zuckermasse im geeigneten Verhältnis möglichst zeitkonstant dosiert und dann mit engem Verweilzeitspektrum gemischt. In einer bevorzugten Ausführungsform wird anschließend noch eine Entgasung durchgeführt, da beim Mischen der Partikel mit der flüssigen Phase Luft eingemischt wird. Da bei der Entgasung Aromen und andere leicht flüchtige Stoffe unerwünscht abgezogen werden, werden diese Stoffe bevorzugt nach der Entgasung zugemischt. In Figur 1 ist ein Verfahrensschema wiedergegeben, das die wesentlichen Schritte des Verfahrens enthält.

### Dosierung der Partikel

In einer bevorzugten Ausführungsform werden die Partikel zeitkonstant dosiert, wobei insbesondere die Abweichung der Dosierrate (gemessen während 12 Sekunden) von der mittleren Dosierrate (erhalten durch 5 Messungen während 12 Sekunden) bezogen auf die mittlere Dosierrate in % < 30, vorzugsweise < 15, noch bevorzugter < 10, ganz besonders bevorzugt < 5 ist.

Hierfür kommen grundsätzlich alle Dosieraggregate in Frage, welche die erforderliche Genauigkeit ermöglichen, volumetrische Dosieraggregate wie beispielsweise Schneckendosierer, Banddosierer, Lochscheibendosierer, Vibrationsdosierer oder Zellenraddosierer, wie auch gravimetrische Dosieraggregate, wie beispielsweise Dosierbandwaagen oder Differentialdosierwaagen.

### Dosierung der Zuckermasse

In einer bevorzugten Ausführungsform wird die Zuckermasse zeitkonstant dosiert, wobei insbesondere die Abweichung der Dosierrate (gemessen während 12 Sekunden) von der mittleren Dosierrate (erhalten durch 5 Messungen während 12 Sekunden) bezogen auf die mittlere Dosierrate in % < 30, vorzugsweise < 15, noch bevorzugter < 10, ganz besonders bevorzugt < 5 ist.

Hierfür kommen grundsätzlich alle Dosieraggregate in Frage, welche die erforderliche Genauigkeit ermöglichen, volumetrische Dosieraggregate gravimetrische Dosieraggregate, insbesondere Pumpen wie beispielsweise Dosierpumpen, Monopumpen, Kolbenpumpen, Zahnradpumpen. Bevorzugt sind Monopumpen.

### Fest-Flüssig-Mischer

Der Fest-Flüssig-Mischer ist in einer bevorzugten Ausführungsform ein dynamischer oder statischer Mischer, insbesondere geeignet sind dynamische Mischer wie beispielsweise Schneckenmischer, vorzugsweise weitgehend selbstreinigende Schneckenmischer wie beispielsweise Schneckenmischer mit zwei oder mehr Schnecken. In einer bevorzugten Ausführungsform wird für den Fest-Flüssig-Mischer eine Pumpe, insbesondere eine Exzenter- oder Schneckenpumpe eingesetzt. In einer bevorzugten Ausführungsform wird mit dem Fest-Flüssig-Mischer ein Druck von mindestens 0,1 bar (10.000 Pa), vorzugsweise von mindestens 0,2 bar (20.000 Pa), ganz besonders bevorzugt von mindestens 0,3 bar (30.000 Pa) aufgebaut.

In einer bevorzugten Ausführungsform wird die Mischung im Fest-Flüssig-Mischer um höchstens 20°C, vorzugsweise um höchsten 10°C, noch bevorzugter um höchstens 5°C, ganz besonders bevorzugt um höchstens 2,5°C erwärmt.

### Entgasung der Gesamtrezeptur

In einer bevorzugten Ausführungsform wird ein Vakuum in bar absolut von < 0.7 (70.000 Pa), vorzugsweise von < 0.5 (50.000 Pa), noch bevorzugter von < 0.3 (30.000 Pa), noch bevorzugter von < 0.2 (20.000 Pa), ganz besonders bevorzugt von < 0.1 (10.000 Pa) eingesetzt.

Vorzugsweise findet die Entgasung bei aktiver Mischung der Gießmasse statt, wobei dieselben Geräte eingesetzt werden können, wie für die Fest-Flüssig-Mischung. Auch hier werden weitgehend selbstreinigende Schneckenmischer bevorzugt.

In einer bevorzugten Ausführungsform wird die Mischung im Bereich der Entgasung um höchstens 20°C, vorzugsweise um höchsten 10°C, noch bevorzugter um höchstens 5°C, ganz besonders bevorzugt um höchstens 2,5°C erwärmt.

### Dosierung der Additive zur Gesamtrezeptur

Die Additive können grundsätzlich mit denselben Dosieraggregaten zugeführt werden, wie die Zuckermasse. Zusätzlich kommen auch Quetschpumpen in Frage. Die Einmischung der Additive kann über statische wie auch dynamische Mischaggregate erfolgen. Bevorzugt werden statische Mischer eingesetzt.

Ein bedeutender Vorteil des Verfahrens besteht darin, dass im Unterschied zum herkömmlichen Mogul-Verfahren, gemäß dem Mischungen mit typischerweise 60-90°C Massentemperatur verarbeitet werden, auch Mischungen mit tieferer Massentemperatur verarbeitet werden können. Dadurch können temperaturempfindliche Inhaltsstoffe wie Vitamine und Naturstoffe wie Aromen, Fruchtsäfte, Fruchtextrakte oder Fruchtbestandteile schonend verarbeitet werden. Es besteht in der Industrie ein Trend hin zum Einsatz von solchen naturbelassenen Stoffen bei Konfektwaren. Bisher waren die diesbezüglichen Möglichkeiten jedoch durch die ausgeprägte thermische Empfindlichkeit solcher Stoffe begrenzt. Das hier beschriebene Verfahren löst dieses Problem. In einer bevorzugten Ausführungsform wird es daher für die Verarbeitung von gießbaren Mischungen, enthaltend thermisch empfindliche Naturstoffe, insbesondere natürliche Aromen, Fruchtsäfte, Fruchtsaftextrakte oder Fruchtextrakte eingesetzt. In einer weiteren bevorzugten Ausführungsform wird das Verfahren für die Verarbeitung von gießbaren Mischungen, enthaltend thermisch empfindliche Vitamine, eingesetzt.

In einer bevorzugten Ausführungsform liegt die Temperatur in °C bei der Aufbereitung der Mischung bei < 50, vorzugsweise bei < 45, noch bevorzugter bei < 40, noch bevorzugter bei < 35, noch bevorzugter bei < 30, ganz besonders bevorzugt bei < 28. Die untere Grenze für diese Temperatur in °C liegt bei > -20, vorzugsweise bei > -1, noch bevorzugter bei > 5, noch bevorzugter bei > 10, ganz besonders bevorzugt bei > 15.

In einer bevorzugten Ausführungsform des erfindungsgemäßen Tieftemperatur-Mogulverfahrens liegt die Temperatur in °C beim Gießen der Mischung bei < 45, vorzugsweise bei < 40, noch bevorzugter bei < 35, noch bevorzugter bei < 32, noch bevorzugter bei < 30, ganz besonders bevorzugt bei < 28. Die untere Grenze für diese Temperatur in °C liegt bei > -20, vorzugsweise bei > -1, noch bevorzugter bei > 5, noch bevorzugter bei > 10, ganz besonders bevorzugt bei > 15.

In einer bevorzugten Ausführungsform ist die Temperatur beim Gießen tiefer als bei der Aufbereitung der Mischung, da volatile Inhaltsstoffe bei höherer Temperatur vermehrt entweichen können.

### Gefüllte Konfektartikel

Das erfindungsgemäße Verfahren ist insbesondere zur Herstellung gefüllter Konfektartikel geeignet. Ein solcher gefüllter, gummiartiger Konfektartikel auf Stärkebasis umfasst mindestens eine Füllung mit mindestens einer Ummantelung bzw. Umhüllung, wobei die Umhüllung mindestens einen Zucker und noch Partikel partikulärer Stärke enthält und die Füllung von der Ummantelung verschieden ist. Der erfindungsgemäße Konfektartikel weist bevorzugt eine gummielastische Textur auf, welche mit der Textur von Gelatineprodukten vergleichbar ist.

Der Konfektartikel kann insbesondere in einem sogenannten "One-Shot Verfahren" oder einem Schichtverfahren hergestellt werden.

Ein One-Shot Verfahren umfasst folgende Schritte:
- Herstellen einer Gießmasse, enthaltend eine Suspension von quellbaren oder löslichen Stärkepartikeln in einer flüssigen Phase,
- Bereitstellen einer Mogulform,
- Einfüllen der Gießmasse in die Mogul-Form, wobei gleichzeitig oder zeitversetzt eine flüssige Füllung so in die Form eingebracht wird, dass die Füllung zumindest teilweise von der Gießmasse umschlossen wird, so dass eine Umhüllung der Füllung entsteht, wobei die Füllung von der Suspension verschieden ist, und
- Trocknen bzw. Erstarrenlassen des gefüllten Konfektartikels, insbesondere bei einer Temperatur von bis zu 60°C, bevorzugt bis zu 50°C,
- Entfernen des gefüllten Konfektartikels aus der Form.

Das sogenannte "One-Shot Verfahren" ist in der Süßwarenindustrie bisher nur zur Herstellung von Schokoladenpralinen und Trüffelkugeln bekannt geworden und bezeichnet ein Verfahren mit dem Hülle und Füllung von Pralinen oder Trüffelkugeln gleichzeitig oder nahezu gleichzeitig in einem Arbeitsgang in eine Form gebracht werden können. Die entsprechenden Substanzen für den Mantel und die Füllung werden mittels Pumpen zu den Düsen gebracht, wobei jeweils einer Düse eine Pumpe zugeordnet ist.

Zur Durchführung der One-Shot Technologie wird ein Düsenkopf in die Mogul-Form gesenkt und die Gießmasse für die Hülle wird durch eine Ringdüse bzw. einen Ringkanal in diesem einzigen Düsenkopf gepresst. Etwas zeitversetzt wird auch die Füllung durch eine axiale Bohrung des Füllkopfes in die Form gepresst, welcher als mittlere Düse fungiert. Während die Form gefüllt wird, bewegt sich der Füllkopf nach oben aus der Form heraus. Damit der Konfekt geschlossen wird, läuft die Gießmasse kurze Zeit länger als die Füllmasse. Danach kann die Form kurz vibriert werden, um Luftblasen zu beseitigen. Durch einen einzigen "Schuss" wird so ein geschlossener Konfektartikel aus Mantel mit Füllung hergestellt.

Ein Schichtverfahren umfasst erfindungsgemäß folgende Schritte:
- Herstellen einer Gießmasse, enthaltend eine Suspension von quellbaren oder löslichen Stärkepartikeln in einer flüssigen Phase,
- Bereitstellen einer Mogulform,
- Einfüllen eines ersten Teils der Gießmasse in die Mogul-Form,
- Einbringen einer Füllung in die Mogul-Form, so dass die Gießmasse zumindest teilweise von der Füllung bedeckt wird und eine Umhüllung gebildet wird,
- Gießen eines zweiten Teils der Lösung in die Form, so dass die Füllung zumindest teilweise von der Gießmasse umschlossen wird, wobei die Füllung von der Suspension verschieden ist, und
- Trocknen bzw. Erstarrenlassen des Konfektartikels, insbesondere bei einer Temperatur von bis zu 60°C, bevorzugt bis zu 50°C,
- Entfernen des gefüllten Konfektartikels aus der Form.

Mit dem Schichtverfahren können sowohl Konfektartikel hergestellt werden, in welchen die Füllung vollständig von der Gießmasse umschlossen wird, als auch solche, bei denen die Füllung aus der Gießmasse herausragt. Es können auch mehr als zwei unterschiedliche Schichten (Umhüllungen) aufgebracht werden. Die Schichten können sich beispielsweise durch Verwendung unterschiedlicher Farbstoffe unterscheiden.

Da zum Gießen keine hohen Temperaturen benötigt werden, können im Schichtverfahren niedrig schmelzende Füllungen wie Schokoladenstücke Kaubonbons, kandierte Früchte, geschäumte Massen oder inkapsulierte Aromen oder Fruchtkonzentrate verwendet werden, ohne dass diese ihre Form verlieren. Bei Verwendung einer herkömmlichen heißen Gelatinegießmasse zur Herstellung des Konfektes wären diese Füllungen nicht handhabbar.

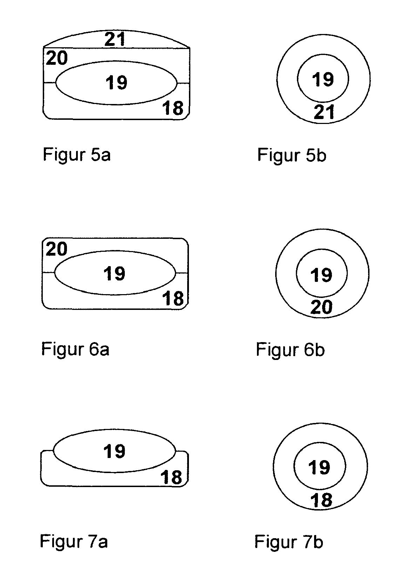

Die Figuren 5a bis 7b zeigen schematisch im Schichtverfahren hergestellte, gefüllte Konfektartikel und zwar als Schnittzeichnung (Figuren 5a, 6a, 7a) bzw. als Aufsicht (Figuren 5b, 6b, 7b). Die Figuren 5a und 5b zeigen einen Konfekt mit einer Schicht 18, welche die Füllung 19 nicht vollständig umschließt. Die Figuren 6a und 6b zeigen einen Konfektartikel, in dem die Füllung durch eine weitere Schicht 20 abgedeckt wird. Diese ist hinreichend transparent, damit die Füllung 19 in der Aufsicht noch erkennbar ist. Der Konfektartikel gemäß den Figuren 7a und 7b weist eine dritte transparente Schicht 21 auf. In der Aufsicht ist die Füllung 19 durch die Schichten 20 und 21 erkennbar.

Im One-Shot Verfahren können temperaturempfindliche flüssige Füllungen wie beispielsweise Fischöle, Weizenkeimöle, Pflanzenextrakte oder Pflanzensäfte oder Pflanzensaftkonzentrate, wie beispielsweise Granatapfel- oder Beerensaftkonzentrate, oder Produkte mit lebenden Keimen (probiotische Produkte), wie beispielsweise Yoghurt, verwendet werden.

Sowohl feste als auch flüssige Füllungen sinken im Konfekt nicht ab, sondern können stabil platziert werden. Die Gefahr eines Durchbrechens der Konfektumhüllung durch die Füllung besteht nicht.

Das Trocknen bzw. Erstarrenlassen erfolgt bevorzugt bei einer Temperatur von mindestens 25°C. Die relative Luftfeuchtigkeit während des Trocknens beträgt bevorzugt 20 - 40 %. Es wird bevorzugt bis zu einem Restwassergehalt von 11 - 15 Gew.-%, besonders bevorzugt von 12 - 14 Gew.-%, getrocknet. Hierzu wird üblicherweise ein Zeitraum von 2 bis 3 Tagen benötigt.

Der erfindungsgemäße gefüllte Konfektartikel kann mit einem Finishing aus brachenüblichen Überzugsmitteln versehen werden. Bevorzugte Überzugsmittel sind pflanzliche Öle, Carnaubawachs und Bienenwachs. Die Überzugsmittel können auch Aromen enthalten.

Der erfindungsgemäße gefüllte Konfektartikel hat eine gummielastische Textur, d. h. eine Textur, welche mit der Textur von Gelatineprodukten vergleichbar ist. Solche Texturen setzen bisher nicht erreichte Qualitätsstandards. Sie sind insbesondere hinsichtlich Gummielastizität und Transparenz sehr nahe am Gelatine-Standard und unterscheiden sich damit sehr deutlich von anderen Stärketexturen. Somit können vegetarische, gummielastische (gefüllte) Konfektartikel hergestellt werden, welche zudem die Anforderungen an Halal- und Kosher-Produkte erfüllen. Alle gängigen Formen und Produktgrößen der bekannten Gelatineprodukte sind auch für den erfindungsgemäßen Konfektartikel realisierbar.

Erfindungsgemäße gefüllte Konfektartikel können somit ohne Kochprozess auf branchenüblichen Mogulanlagen hergestellt werden, und die verwendete Gießmasse kann während der Aufbereitung immer auf Umgebungstemperatur bleiben. Dies ist eine ideale Voraussetzung für neuartige Produkte mit hitzesensitiven Ingredienzien. Damit sind ganz neue Produkte möglich für den Bereich "Health-Produkte", Kinderprodukte oder Fun-Produkte, auch mit den unterschiedlichsten Formgebungen.

### Kurze Beschreibung der Zeichnungen

Figur 1 zeigt eine Vorrichtung zur Durchführung des erfindungsgemäßen Mogulverfahrens.
Figur 2 ist eine schematische Darstellung eines Verweilzeitspektrums.
Figur 3 zeigt ein Verweilzeitspektrum W1(t) gemäß Beispiel 1.
Figur 4 zeigt ein Verweilzeitspektrum W2(t) gemäß Beispiel 1.
Figur 5a zeigt eine schematische Schnittansicht eines erfindungsgemäßen gefüllten einschichtigen Konfektes.
Figur 5b zeigt eine Draufsicht auf einen erfindungsgemäßen gefüllten einschichtigen Konfekt.
Figur 6a zeigt eine schematische Schnittansicht eines erfindungsgemäßen gefüllten zweischichtigen Konfektes.
Figur 6b zeigt eine Draufsicht auf einen erfindungsgemäßen gefüllten zweischichtigen Konfekt.
Figur 7a zeigt eine schematische Schnittansicht eines erfindungsgemäßen gefüllten dreischichtigen Konfektes.
Figur 7b zeigt eine Draufsicht auf einen erfindungsgemäßen gefüllten dreischichtigen Konfekt.

### Beispiele

### Beispiel 1

Zum Aufbau der Anlage siehe Figur 1.

Zuckermasse: Verhältnis Zucker zu Glucose (DE = 60) = 2:3, 69°Brix, dosiert mit Netzsch Monopumpe (4, Figur 1) bei 30 Hz, 13,4kg/h.

Stärkepartikel: basierend auf hydroxypropylierter, vernetzter Tapiokastärke (CreamTex 75725 von Cerestar), plastifiziert, enthaltend 10% kurzkettige Amylose mit Polymerisationsgrad von 25, Wassergehalt 10,6 %, Partikelgröße: 10 bis 150 Mikrometer. Molekulargewicht M_{w} der langkettigen Stärke 920.000 g/mol. Dosiert mit Gerike 1-Schnecken Dosierer (3, Figur 1), volumetrisch, Stufe 3, 3,4kg/h. Insgesamt 25% Partikel bezogen auf die Trockenmasse der gesamten Mischung.

Additive: Citronensäure 1:1 (50 gew.-%ige Lösung von Citronensäure in Wasser), Himbeeraroma, Farbstoff Rot, flüssig. Verhältnis Säure zu Aroma zu Farbstoff = 1 : 0.145 : 0.036. Dosiert mit Kolbenpumpe (13, Figur 1), 0,45 kg/h.

Der Wassergehalt der Gießmischung lag bei 26,7% und die Temperatur bei 25°C. Zur Entgasung wurde ein Vakuum von 0,1 bar (10.000 Pa) absolut eingesetzt.

Fest-Flüssig Mischer (8, Figur 1): Doppelschnecken Side Feeder Extruder, gleichläufig (Eigenbau), Förderschnecken mit Steigung 30° zur Achse, 350 upm.

Vakuum: Doppelschnecken Förderer (10, Figur 1), gleichläufig, 1000 upm, aus K-Tron Dosierer ausgebaut. Die Viskosität der Gießmasse lag bei rund 10 Pas, gemessen bei 1,1/s.

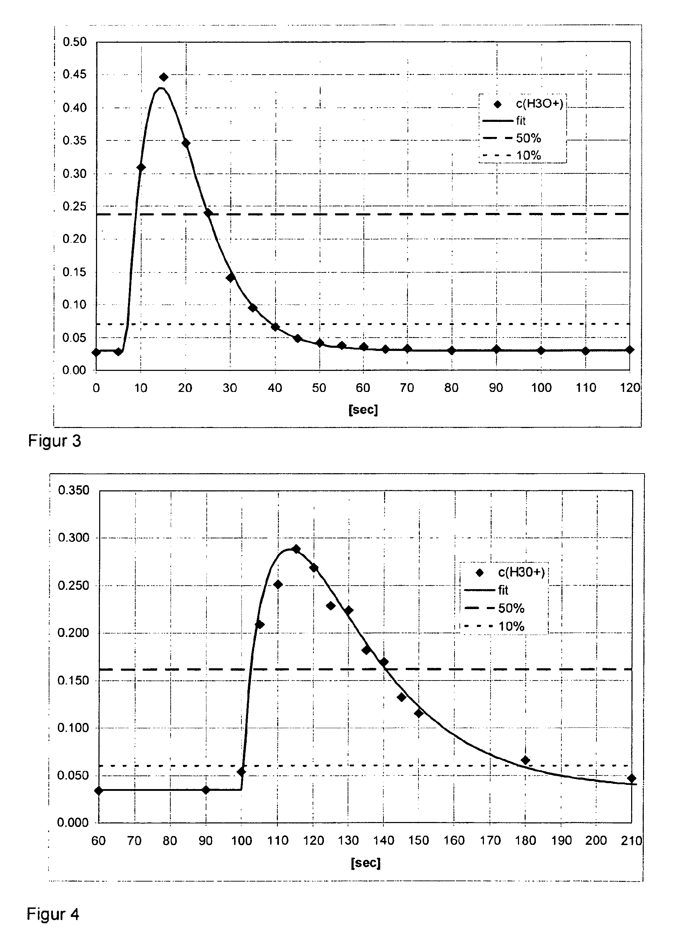

Zur Messung der Verweilzeitspektren wurden jeweils 5 ml einer 1-molaren SalzsäureLösung zu Beginn der Fest-Flüssig Mischung (8, Figur1) zugegeben. Gemessen wurden die Verweilzeitspektren mittels pH Messung, woraus die Konzentrationen der H₃O⁺ Ionen c(H₃O⁺) berechnet wurden. Das Verweilzeitspektrum W1(t) mit den charakteristischen Werten tM = 15s, tH = 17s, tE - tM = 24s, wurde unmittelbar nach dem Mischer 8 gemessen und ist in Figur 3 dargestellt. Das Verweilzeitspektrum W2(t) am Eingang der Mogulanlage (17, Figur 1) mit den charakteristischen Werten TM = 115 s, tH = 37 s, tE - tM = 74 s, ist in Figur 4 wiedergegeben. Vergleichsmessungen ergaben eine zeitliche Variation der charakteristischen Werte der Verweilzeitspektren von kleiner als 5%.

### Beispiel 2

Analog Beispiel 1. Für die Stärkepartikel wurde dieselbe Stärke eingesetzt, jedoch nicht in plastifizierter Form, sondern in pregelatinisierter Form (walzengetrocknet), wodurch das Molekulargewicht M_{w} bei rund 30.000.000 g/mol lag. Es wurde keine kurzkettige Stärke eingesetzt. Die gemessenen Werte zu den Verweilzeitspektren und deren zeitlicher Variation waren im Rahmen der Messgenauigkeit gleich wie bei Beispiel 1, jedoch lag die Viskosität der Gießmischung bei 12 Pas. Das erhaltene Produkt wies eine höhere Gummielastizität auf als bei Beispiel 1.

### Beispiel 3

Für die Stärkepartikel wurde die hydroxypropylierte Kartoffelstärke Emden KH 15 von Emsland in pregelatinisierter Form (walzengetrocknet). Das Molekulargewicht M_{w} lag bei rund 13.500.000 g/mol. Die gemessenen Werte zu den Verweilzeitspektren und deren zeitlicher Variation waren im Rahmen der Messgenauigkeit gleich wie bei Beispiel 1, jedoch lag die Viskosität der Gießmischung bei 13 Pas. Das erhaltene Produkt wies eine höhere Gummielastizität auf als bei Beispiel 1 und eine geringfügig tiefere Gummielastizität als bei Beispiel 2.

### Beispiel 4

Zuckermasse: 80 g Zuckersirup (40 Gew.-% Sacharose, 60 Gew.-% Glucose), 80°Brix

Stärkepartikel: 25 g, basierend auf hydroxypropylierter, vernetzter Tapiokastärke (CreamTex 75725 von Cerestar), plastifiziert, enthaltend 10% kurzkettige Amylose mit Polymerisationsgrad von 25, Wassergehalt 9,9 %, Partikelgröße: 10 bis 150 Mikrometer. Molekulargewicht M_{w} der langkettigen Stärke 920.000 g/mol.

Additive: 4 g Citronensäure 1:1, 0,18 g Himbeeraroma.

Wasser: 9,1 g.

Die Herstellung der Gießmasse erfolgte gemäß Beispiel 1 in zwei Batches. Der Zuckersirup wurde aufgekocht und anschließend auf 25°C abgekühlt. Dem ersten Batch wurde 0,07 g roter Farbstoff (flüssig) zugefügt, dem zweiten Batch wurde 0,07 g gelber Farbstoff (flüssig) zugefügt. Dann wurde die Citronensäure zugegeben. Anschließend wurde das Wasser zugegeben. Diese Komponenten wurden mit dem Doppelschnecken Side Feeder Extruder gemischt. Anschließend wurden die Stärkepartikel zudosiert, eingerührt, und die eingerührte Luft bei 0,06 bar (6.000 Pa) Vakuum entfernt. Schließlich wurde das Aroma zugegeben.

Eine mit Stärkepulver ausgekleidete Mogulform wurde zu einem Drittel mit dem ersten Batch gefüllt. Dann wurde ein Schokoladenstück auf das erste Batch gegeben und die Form anschließend mit dem zweiten Batch aufgefüllt, so dass das Schokoladenstück vollständig von der Gießmasse umschlossen war. Dies erfolgte auf einer Laborgießstation 163.02 der Firma WDS. Das Befüllen der Mogul-Formen erfolgte innerhalb von insgesamt 14 Minuten. Der so erhaltene Konfekt wurde bei 30°C und 30% relativer Luftfeuchtigkeit innerhalb von 3 Tagen auf einen Restwassergehalt von 14 Gew.-% getrocknet. Die Oberfläche des Konfekts wurde mit einem Finishing aus Bienenwachs überzogen.

### Beispiel 5

Beispiel 4 wurde in einem One-Shot Verfahren wiederholt. Es wurde nur das erste Batch der Gießmasse verwendet. Die Schokoladenstückchen wurden durch Fischöl ersetzt. Die beiden flüssigen Substanzen wurden in bekannter Weise in einem Pumpschritt abgefüllt.

### Messmethoden

Die dynamische Viskosität wurde mit Hilfe eines Brookfield Viskosimeters des Typs LVDV-I+ bei der Scherrate von 1,1/s (5 rpm, Spindle 25) und 25°C bestimmt.

### Bezugszeichenliste

| | |
|---|---|
| 1 | Silo zum Lagern von Partikeln |
| 2 | Tank zum Lagern von Zuckermasse (Zucker/Glucose Mischung) |
| 3 | Gravimetrische Dosierung Partikel |
| 4 | Gravimetrische Dosierung Zuckermasse |
| 5 | Wasser |
| 6 | Gravimetrische Dosierung Wasser |
| 7 | Dosierrate |
| 8 | Mischung Partikel mit Zuckermasse |
| 9 | Vakuum |
| 10 | Vakuum Entgasung |
| 11 | Reinigung, z.B. mit Zuckermasse |
| 12 | Reinigung mit Wasser |
| 13 | Dosierstation Additive |
| 14 | Durchflussüberwachung |
| 15 | QIC (Quantity Indication Control: Gewichtsmessung und Kontrolle) |
| 16 | FIC (Fluid Indication Control: Durchflussmessung und Kontrolle) |
| 17 | Mogulanlage |
| | |
| 18 | 1. Schicht |
| 19 | Füllung |
| 20 | 2. Schicht |
| 21 | 3. Schicht |

## Patentansprüche

1. Tieftemperatur-Gießverfahren zur Herstellung von Konfektartikeln auf einer Mogulanlage mit kontrolliertem Verweilzeitspektrum, wobei quellbare oder lösliche Stärkepärtikel in einer flüssigen Phase gemischt werden und dann diese Masse gegossen wird, wobei die Stärkepartikel erst nach dem Gießen substantiell quellen oder sich lösen, und wobei die Stärkepartikel mindestens eine Stärke enthalten, welche einen Polymerisationsgrad von mehr als 300 aufweist, **dadurch gekennzeichnet, dass** nach Mischen der festen Phase mit der flüssigen Phase die Verweilzeit der Gießmasse derart eingestellt wird, dass das Maximum tM des Verweilzeitspektrums W1(t) unmittelbar nach Mischung der festen Phase mit der flüssigen Phase bei < 10 min liegt und die Halbwertsbreite tH dieses Verweilzeitspektrums < 10 min ist.

2. Verfahren nach Anspruch 1, wobei das Maximum tM des Verweilzeitspektrums W2(t) eingangs der Mogulanlage bei < 15 min liegt.

3. Verfahren nach einem der vorangehenden Ansprüche 1 oder 2, wobei die Halbwertsbreite tH des Verweilzeitspektrums W2(t) eingangs der Mogulanlage bei < 10 min liegt.

4. Verfahren nach einem der vorangehenden Ansprüche 1 bis 3, wobei die Zeit tE - tM des Verweilzeitspektrums W1(t) unmittelbar nach Mischung der festen Phase mit der flüssigen Phase < 15 min ist.

5. Verfahren nach einem der vorangehenden Ansprüche 1 bis 4, wobei die Zeit tE-tM des Verweilzeitspektrums W2(t) eingangs der Mogulanlage < 15 min ist.

6. Verfahren nach einem der vorangehenden Ansprüche 1 bis 5, wobei die Partikel und die flüssige Phase zeitkonstant dosiert werden.

7. Verfahren nach einem der vorangehenden Ansprüche 1 bis 6, wobei bei oder nach der Herstellung der Suspension die Suspension evakuiert wird, und insbesondere nach der Evakuierung Aroma zugemischt wird.

8. Verfahren nach einem der vorangehenden Ansprüche 1 bis 7, wobei die Herstellung der Suspension und das Gießen der Suspension in zwei verschiedenen Verfahrenszonen stattfinden.

9. Verfahren nach einem der vorangehenden Ansprüche 1 bis 8, wobei die Suspension beim Gießen eine Viskosität von < 60 Pas aufweist.

10. Verfahren nach einem der vorangehenden Ansprüche 1 bis 9, wobei die Stärkepartikel in der Suspension eine mittlere Partikelgröße von > 1 µm und von < 500 µm aufweisen.

11. Verfahren nach einem der vorangehenden Ansprüche 1 bis 10, wobei die Stärkepartikel mindestens eine langkettige Stärke aufweisen, deren Gewichtsmittel M_{w} der Molekulargewichtsverteilung mindestens 500.000 g/mol beträgt.

12. Verfahren nach einem der vorangehenden Ansprüche 1 bis 11, insbesondere One-Shot Verfahren, umfassend die folgenden Schritte:
- Herstellen einer Gießmasse, enthaltend eine Suspension von quellbaren oder löslichen Stärkepartikeln in einer flüssigen Phase,
- Bereitstellen einer Mogulform,
- Einfüllen der Gießmasse in die Mogul-Form, wobei gleichzeitig oder zeitversetzt eine flüssige Füllung so in die Form eingebracht wird, dass die Füllung zumindest teilweise von der Gießmasse umschlossen wird, so dass eine Umhüllung der Füllung entsteht, wobei die Füllung von der Suspension verschieden ist,
- Trocknen bzw. Erstarrenlassen des gefüllten Konfektartikels, und
- Entfernen des gefüllten Konfektartikels aus der Form.

13. Verfahren nach einem der Ansprüche 1 bis 11, insbesondere Schichtverfahren, umfassend die folgenden Schritte:
- Herstellen einer Gießmasse, enthaltend eine Suspension von quellbaren oder löslichen Stärkepartikeln in einer flüssigen Phase,
- Bereitstellen einer Mogulform,
- Einfüllen eines ersten Teils der Gießmasse in die Mogul-Form,
- Einbringen einer Füllung in die Mogul-Form, so dass die Gießmasse zumindest teilweise von der Füllung bedeckt wird und eine Umhüllung gebildet wird,
- Gießen eines zweiten Teils der Lösung in die Form, so dass die Füllung zumindest teilweise von der Gießmasse umschlossen wird, wobei die Füllung von der Suspension verschieden ist,
- Trocknen bzw. Erstarrenlassen des gefüllten Konfektartikels, und
- Entfernen des gefüllten Konfektartikels aus der Form.

14. Gefüllter Konfektartikel auf Stärkebasis, herstellbar nach einem Verfahren gemäß einem der Ansprüche 12 oder 13, umfassend mindestens eine Füllung mit mindestens einer Umhüllung, wobei die Umhüllung mindestens eine Zuckermasse und noch Partikel partikulärer Stärke enthält und die Füllung von der Umhüllung verschieden ist.

## Claims

1. A low-temperature casting method for producing confectionery articles on a Mogul unit with controlled residence time spectrum, wherein swellable or soluble starch particles are mixed in a liquid phase and this mass is then cast, wherein the starch particles will substantially swell or dissolve only after casting, and wherein the starch particles comprise at least one starch that has a degree of polymerization in excess of 300, **characterized in that**, after mixing the solid phase with the liquid phase, the residence time of the casting compound is adjusted in such a way that the maximum tM of the residence time spectrum W1(t) is < 10 min immediately after mixing the solid phase with the liquid phase and the half width tH of this residence time spectrum is < 10 min.

2. The method according to Claim 1, wherein the maximum tM of the residence time spectrum W2(t) at the beginning of the Mogul unit is < 15 min.

3. The method according to any one of the preceding Claims 1 or 2, wherein the half width tH of the residence time spectrum W2(t) at the beginning of the Mogul unit is < 10 min.

4. The method according to any one of the preceding Claims 1 to 3, wherein the time tE - tM of the residence time spectrum W1(t) is < 15 min immediately after mixing the solid phase with the liquid phase.

5. The method according to any one of the preceding Claims 1 to 4, wherein the time tE-tM of the residence time spectrum W2(t) at the beginning of the Mogul unit is < 15 min.

6. The method according to any one of the preceding Claims 1 to 5, wherein the particles and the liquid phase are metered constant in time.

7. The method according to any one of the preceding Claims 1 to 6, wherein the suspension is evacuated during or after the production of the suspension, and in particular aroma is admixed after the evacuation.

8. The method according to any one of the preceding Claims 1 to 7, wherein the production of the suspension and the casting of the suspension take place in two different processing zones.

9. The method according to any one of the preceding Claims 1 to 8, wherein the suspension has a viscosity < 60 Pas during casting.

10. The method according to any one of the preceding Claims 1 to 9, wherein the starch particles in the suspension have an average particle size > 1 µm and < 500 µm.

11. The method according to any one of the preceding Claims 1 to 10, wherein the starch particles comprise at least one long-chain starch, and wherein the weight average M_{w} of the molecular weight distribution of said starch is at least 500,000 g/mol.

12. The method according to any one of the preceding Claims 1 to 11, particularly a One-Shot method, comprising the following steps:
- producing a casting compound that comprises a suspension of swellable or soluble starch particles in a liquid phase,
- providing a Mogul mould,
- filling the casting compound into the Mogul mould, wherein a liquid filling is introduced into the mould simultaneously or in a time-delayed fashion in such a way that the filling is at least partially enclosed by the casting compound such that a coating of the filling is formed, wherein the filling differs from the suspension,
- drying or solidifying the filled confectionery article, and
- removing the filled confectionery article from the mould.

13. The method according to any one of the preceding Claims 1 to 11, particularly a layering method, comprising the following steps:
- producing a casting compound that comprises a suspension of swellable or soluble starch particles in a liquid phase,
- providing a Mogul mould,
- filling a first part of the casting compound into the Mogul mould,
- introducing a filling into the Mogul mould such that the casting compound is at least partially covered by the filling and a coating is formed,
- casting a second part of the solution into the mould such that the filling is at least partially enclosed by the casting compound, wherein the filling differs from the suspension,
- drying or solidifying the filled confectionery article, and
- removing the filled confectionery article from the mould.

14. A filled confectionery article that is based on starch producible by a method according to any one of the Claims 12 or 13, comprising at least one filling with at least one coating, wherein the coating comprises at least one sugar mass, as well as particles of particulate starch, and the filling differs from the coating.

## Revendications

1. Procédé de coulée à basse température pour la fabrication d'articles de confiseries sur une installation Mogul à spectre de temps d'attente contrôlée, dans lequel des particules de fécule fluides ou solubles sont mélangées dans une phase liquide puis cette masse est coulée, les particules de fécule ne devenant sensiblement fluides ou ne se dissolvant qu'après la coulée et les particules de fécule contenant au moins une fécule possédant un degré de polymérisation de plus de 300, **caractérisé en ce que**, après mélange de la phase solide avec la phase liquide, le temps d'attente de la masse coulée est réglé de manière à ce que le maximum tM du spectre de temps d'attente W1(t) juste après le mélange de la phase solide avec la phase liquide soit < 10 min. et que l'amplitude de demi-valeur tH de ce spectre de temps d'attente soit < 10 min.

2. Procédé selon la revendication 1, dans lequel le maximum tM du spectre de temps d'attente W2(t) à l'entrée de l'installation Mogul est < 15 min.

3. Procédé selon une des revendications précédentes 1 ou 2, dans lequel l'amplitude de demi-valeur tH de ce spectre de temps d'attente W2(t) à l'entrée de l'installation Mogul est < 10 min.

4. Procédé selon une des revendications précédentes 1 à 3, dans lequel le temps tE-tM du spectre de temps d'attente W1(t) juste après le mélange de la phase solide avec la phase liquide est < 15 min.

5. Procédé selon une des revendications précédentes 1 à 4, dans lequel le temps tE-tM du spectre de temps d'attente W2(t) à l'entrée de l'installation Mogul est < 15 min.

6. Procédé selon une des revendications précédentes 1 à 5, dans lequel les particules et la phase liquide sont dosées de manière constante dans le temps.

7. Procédé selon une des revendications précédentes 1 à 6, dans lequel, après création de la suspension, la suspension est évacuée et en particulier de l'arôme est ajouté après son évacuation.

8. Procédé selon une des revendications précédentes 1 à 7, dans lequel la création de la suspension et la coulée de la suspension ont lieu dans deux zones opératoires différentes.

9. Procédé selon une des revendications précédentes 1 à 8, dans lequel la suspension présente à la coulée une viscosité < 60 Pas.

10. Procédé selon une des revendications précédentes 1 à 9, dans lequel les particules de fécule de la suspension présentent une taille moyenne de particules > 1 µm et < 500 µm.

11. Procédé selon une des revendications précédentes 1 à 10, dans lequel les particules de fécule de la suspension contiennent au moins une fécule à chaîne longue dont la moyenne en poids M_{w} de la répartition du poids moléculaire s'élève à au moins 500 000 g/mole.

12. Procédé selon une des revendications précédentes 1 à 11, en particulier procédé à jet unique, comprenant les étapes opératoires suivantes :
- fabrication d'une masse coulée contenant une suspension de particules de fécule fluides ou solubles dans une phase liquide,
- préparation d'un moule Mogul,
- incorporation de la masse coulée dans le moule Mogul, un fourrage liquide étant incorporé dans le moule simultanément ou en différé de manière à ce que le fourrage soit entouré au moins partiellement par la masse coulée afin de créer un enrobage du fourrage, le fourrage différant de la suspension,
- séchage ou solidification de l'article de confiserie fourré et
- retrait de l'article de confiserie fourré du moule.

13. Procédé selon une des revendications 1 à 11, en particulier procédé à couches, comprenant les étapes suivantes :
- fabrication d'une masse coulée contenant une suspension de particules de fécule fluides ou solubles dans une phase liquide,
- préparation d'un moule Mogul,
- incorporation d'une première partie de la masse coulée dans le moule Mogul,
- incorporation d'un fourrage dans le moule Mogul de manière à ce que la masse coulée soit du moins en partie recouverte par le fourrage et à ce qu'un enrobage soit constitué,
- incorporation d'une seconde partie de la solution dans le moule de manière à ce que le fourrage soit entouré au moins partiellement par la masse coulée, le fourrage différant de la suspension,
- séchage ou solidification de l'article de confiserie fourré et
- retrait de l'article de confiserie fourré du moule.

14. Article de confiserie fourré à base de fécule, pouvant être fabriqué selon un procédé selon une des revendications 12 ou 13, contenant au moins un fourrage pourvu d'au moins un enrobage, l'enrobage contenant au moins une masse de sucre et également des particules de fécule particulière et le fourrage différant de l'enrobage.
